# EUROPEAN PATENT APPLICATION

(11) **EP 2 420 481 A1**
(43) Date of publication of application: **22.02.2012**
(21) Application number: 09842380.9
(22) Date of filing: 24.03.2009
(51) Int. Cl.: C04B 30/00, C04B 32/00

(54) **COMPOSITION AND METHOD FOR OBTAINING A NATURAL CANTERA PASTE PRODUCT FOR USE AS A COATING IN THE CONSTRUCTION SECTOR**

(71) Applicant: Arroyo Bernal, Rubén, Guadalajara, Jalisco (MX)
(72) Inventor: Arroyo Bernal, Rubén, Guadalajara, Jalisco (MX)
(74) Representative: ABG Patentes, S.L.
(86) International application number: PCT/MX2009/000024
(87) International publication number: WO 2010/110636

(57) **Abstract**

This invention relates to a composition and method for obtaining a natural cantera paste product for use as a coating in the construction sector. The material obtained using this formula and method can be used to cover prefabricated surfaces, such as plasterboard, columns, cornices, walls, floors, etc. One of the advantages of this invention is that it can be used to cover smooth surfaces without having to first attach a mesh to it, and it can be used to restore cantera buildings (museums and palaces), monuments or any other type of natural cantera surface. The natural cantera paste product obtained using this formula and method, is easy to apply, looks like natural cantera stone, and is a material that is much cheaper than natural cantera stone, as it is produced using natural cantera stone waste.

## Description

### BACKGROUND OF THE INVENTION

This invention relates to a composition and process for producing a natural (quarry stone) cantera product, which is used for coatings in the construction industry.

The quarry stone has been used in the construction industry, primarily by shapin the rock by means of lathes and tools, said cantera being used for coating floors, facades, pillars, shelves, etc.

The proposed product is of high quality and having an appearance identical to the natural cantera because it results from a composition in which one of its main elements is the dust of natural cantera.

There are various formulations and processes for obtaining coatings or compacted artificial cantera parts, as it will be described hereinbelow, but a formulation and process identical to the ones proposed in this document are not known.

The result obtained from this composition an process reduces the production costs as there is a significant decrease in labor force and raw materials, because it is no longer necessary to sculpt the quarry stone to obtain a floor tile or a ledge and mainly because it is the waste produced wren the quarry stone is sculpted.

In the currently known processes in which a high volume of waste material is generated and not used, some problems are faced, one of them being the lack of the quarry stone, high costs due to labor force and time involved in the shapin of the pieces. Other problem currently faced results from the geological characteristics of the cantera, which is a porous and inconsistent material that deteriorates easily by the mere time-lapse and environmental factors.

In order to the above problems, a novel composition and process for obtaining a water-based natural cantera paste product is proposes, which has the appearance of the cantera (quarry stone) but much better qualities and is intended to be used as a coating in the construction industry.

One of the advantages being obtained fro the new proposed composition and process is that in using the cantera waste of a specific type, the properties of the material are exploited in a 100 percent, and resistance to compression, moisture and abrasion are enhanced. Specially, the costs are substantially reduced because the cost of a natural cantera solid column in comparison with a column (made of any other inexpensive material) coated with natural cantera are very different.

At present, some processes for obtaining construction materials that imitates the cantera are known, for instance, the process described in patent ES 2181 577 A1, in which the waste material generated by carving or shapin the quarry stone is utilized. Nevertheless, the new proposed formulation is completely different from the formulation and process described in the aforementioned patent because our formulation not comprise cement, stones, artificial colors, marble chips or sands, which materials alter or modify the structure of the resulting product and affect the and geological characteristics thereof. In addition, our invention not intend to claim the process of pouring into molds the mixture resulting from the combination of the elements of our formulation, because a water-based natural quarry stone paste is obtained from our formulation, which is to be used as coating for smooth surfaces such as walls or floors, or for coating parts or objects made of any material.

Also, a product called Bloque as enhanced artificial stone block and use in the construction industry is disclosod in the patent ES 1042 491 U, which results from a mixture of different products which are placed inside a homogenizing machine and thereafter poured into a mold. Said product is **characterized in that** it is formed by crushed limestone, cement, sand, said elements being different from the new formulation and process proposed herein.

Additionally, the patent MX199223 describes a process for making pastes for canteras and porous limestones based on polyester resins, said process and composition are completely different with the new proposed product because the aforesaid patent uses solvents to bond an fix the materials. In addition, the patent X20021206 describes a process for obtaining a product, in which a composition of polyester resin and volcanic rock is mixed, thereby achieving a single piece that forms a coating for easy application and placement on the surface ar object desired to be coated. According to this patent, a paste for coating surfaces is also obtained, however, said process comprises a preheating step of the rock at the beginning and at the end of the manufacturing process; consequently, the said composition is completely different.

In addition, there are in the market different types of concrete that imitate natural products, however, unlike the proposed one they have a smooth finish, thinner or without thickness, which differs significantly from the appearance and natural features of the cantera coating bein proposed in the subject application.

### DESCRIPTION

The present invention relates to a composition and process to obtain a water-based natural cantera paste mixture having natural color and to be used as millimetric coating on prefabricated surfaces, namely: drywall, wood, polystyrene, and also to be applied an the surface of decorative objects for decorative purposes. For example, to make milimetric coatings on columns, floors, walls, cornices, etc. This novel composition makes unnecessary to use cement or san to reinforce the material, because it has resistance higher than the natural cantera. Nor it is necessary to add artificial dyes or pigments as the obtained paste retains the natural color of the quarry dust used in the mixture.

The particle size of the natural cantera dust conceived in the present composition allows a better adhesion and resistance of the coating on prefabricated surfaces.

Another advantage of this cantera type coating material is that it is much cheaper than natural quarry stone, because it is taken advantage of the waste of the quarry stone or cantera.

Following with the advantages of the invention, this coating can be applie to any smooth surfaca without previously placing a mesh to fix, bind or avoid cracking.

This material has high plasticity because of the action of the mixed copolymers contained in the composition, the coating dryin time is fast due to the minerals involved in the process. The paste composition of cantera proposed is not remulsionable since it has integral protection due to the copolymer contained therein.

### COMPONENTS OF THE FORMULATION

- 66.66% by weight of natural cantera dust of a specific class, having a ranulometry ranging from 0.1 to 0.8 mm;
- 33.33% by weight of natural cantera dust of a specific class, having a granulometry ranging from 2 mm to mm;
- 2.5% by weight of powdered mixed Acronals;
- 10.00% by weight of liquid copolymers;
- 20-30% by weight of distilled water; and
- 2.5% by weight of mixed minerals, namely:
   62% by weight of silicon oxide;
   11.60% by weigth of aluminum oxide,
   2.22% by weight of ferric oxide;
   4.94% by weight of calcium oxide;
   1.78% by weight of potassium oxide;
   1.01 % by weight of magnesium oxide;
   0.31 % by weight of sodium oxide;
   0.16 by weight of titanium dioxide.

For a better understanding, an embodiment of the composition and process for producing the natural cantera paste is isclosed below.

### Example 1

The process for makin a water-based paste of natural cantera starts with the separation of quarry stone waste materials of a single our type, that is, pinion, pink, green or rey color quarry, of different granulometries and sieving 66% of the aground quarry stone for a particle size ranging from 0.1 mm to 0.8 mm and 33.33% for a particle ranting from 2 mm to 8 mm.

Next, the ground quarry stone is mixed in dry condition; then, 2.5% by weight of the acronals, which were previously mixed by separate, are added; then, 10% by weight of the copolymers and 2.5% by weight of the minerals, as reaction catalysts, are added, wherein the minerals comprise: 62% by weight of silicon oxide; 11.60% by weigth of aluminum oxide; 2.22% by weight of ferric oxide; 4.94% by weight of calcium oxide; 1.78% by weight of potassium oxide; 1.01% by weight of magnesium axida; 0.31% by weight of sodium oxide; 0.16 by weight of titanium dioxide; and finally, 20-30% by weight of distilled water is added. All of the above is stirred the time until homogenization is complete, about 3 to 5 minutes.

## Claims

1. Formulation or composition for obtaining a natural cantera paste product for use as a coating, based on the following elements:
- 66.66% by weight of natural cantera dust of a specific class, having a granulometry ranging from 0.1 to 0.8 mm;
- 33.33% by weight of natural cantera dust of a specific class, having a granulometry ranging from 2 mm to mm;
- 2.5% by weight of powderad mixed Acronals,
- 10.00% by weight of liquid copolymers;
- 20-30% by weight of distilled water; and
- 2.5% by weight of mixed minerals, namely:
62% by weight of silicon oxide;
11.60% by weigth of aluminu oxide;
2.22% by weight of ferric oxide;
4.94% by weight of calcium oxide;
1.78% by weight of potassium oxide;
1.01 % by weight of magnesium oxide;
0.31 % by weight of sodium oxide;
0.16 by weight of titanium dioxide.

2. A process for obtaining a natural cantera paste product for use as a coating, by using the composition of claim 1, **characterized in** the process initiates by dry mixin 66.66% by weight of natural cantera dust of a specific class, having a granulometry ranging from 0.1 to 0.8 mm and 33.33% by weight of said dust having a granulometry ranging from 2 mm to 8 mm; then, 2.5% by weight of the powdered mixed acronals, which were previously mixed, are added; then, 10% by weight of the liquid copolymers are added; and immediately, 2.5% by weight of the reaction catalytic minerals are added, wherein the minerals comprise: 62% by weight of silicon oxide; 11.60% by weigth of aluminum oxide; 2.22% by weight of ferric oxide; 4.94% by weight of calcium oxide; 1.78% by weight of potassium oxide; 1.01% by weight of magnesium oxide; 0.31% by weight of sodium oxide; 0.16 by weight of titanium dioxide; and finally, 20-30% by weight of distilled water is added; and all of the above is stirred for an approximate period of 3 to 5 minutes until homogenization is complete.

3. Natural cantera product for use as coating, which is obtained from the formulation described in claims 1 and 2.

4. Natural cantera produce obtained from the process described in claim 2.
